# EUROPEAN PATENT APPLICATION

(11) **EP 1 154 412 A1**
(43) Date of publication of application: **14.11.2001**
(21) Application number: 00981677.8
(22) Date of filing: 13.12.2000
(51) Int. Cl.: G11B 7/0045

(54) **OPTICAL DISK DEVICE**

(30) Priority: 13.12.1999 JP 35293599
(71) Applicant: MATSUSHITA ELECTRIC INDUSTRIAL CO., LTD., Kadoma-shi, Osaka 571-8501 (JP)
(72) Inventor: KONO, Kazuhiko, Takatsuki-shi, Osaka 569-1121 (JP)
(74) Representative: Crawford, Andrew Birkby
(86) International application number: JP0008805
(87) International publication number: WO0143124

(57) **Abstract**

An optical disk device is capable of preventing a signal from being incorrectly recorded or erased on other data plane than a data plane in a recording operation on a disk having plural layers of data plane. A focus monitor monitors an increase of a focus error signal. A reflected light quantity monitor may monitor a drop of the reflected light quantity. A moving of a layer of a data plane during recording may be detected. Depending on these results, a light intensity controller reduces an intensity of a light beam to a reproducing level. The light intensity controller once reduces the intensity to a reproducing level when recording signals in plural layers of data plane. After moving the layer followed by the focus of the light beam, the intensity of the light beam is raised again to the recording level.

## Description

### FIELD OF THE INVENTION

The present invention relates to an optical disk device for recording data in an optical disk having plural layers of data planes.

### BACKGROUND OF THE INVENTION

Technology for high density recording for an optical disk is intensively developed recently. For high density recording, the disk having multiple data layers is extremely effective. For an existing digital versatile disk (DVD), a two-layer play-only disk is already standardized. Recently, recordable two-layer disks are being developed, which are expected to enhance a recording capacity of an optical disk substantially.

An optical disk device using this technology will be explained below with referring to the drawings.

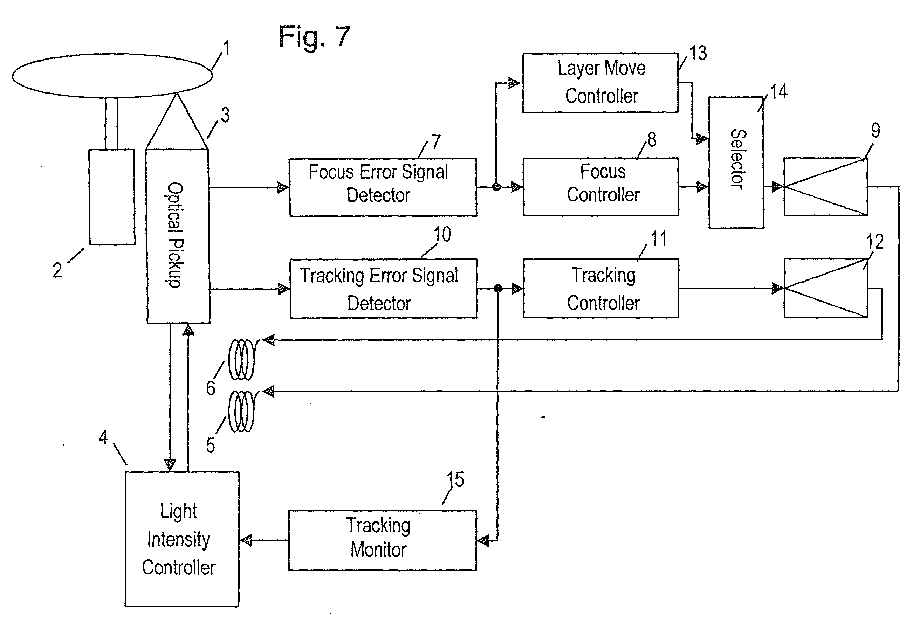

Fig. 7 is a block diagram showing a schematic configuration of an conventional optical disk device. An optical disk 1 has plural layers (two layers for this example for simplifying an explanation), and signals are recorded on a data plane of each layer. A motor 2 rotates the optical disk 1. An optical pickup 3 includes an optical system for focusing a light beam on the data plane of the optical disk 1 with an optical system composed of a semiconductor laser and a lens, and a photo detector for detecting a reflected light. A light intensity controller 4, upon receiving a light intensity monitor signal from the optical pickup 3, compares the signal with a predetermined value, and drives the semiconductor laser of the optical pickup 3, thereby controlling the intensity of the light beam. A focus actuator 5 displaces a focus of the light beam in a nearly vertical direction to the data plane of the optical disk 1. A tracking actuator 6 displaces the focus of the light beam in the radial direction of the optical disk 1. A focus error signal detector 7 detects a relative displacement between the focus of the light beam and data plane of the optical disk 1 depending on the output of the optical pickup 3, and issues a focus error signal. A focus controller 8 processes the focus error signal with a filtering, such as phase compensation or low frequency compensation. A driver 9 drives the focus actuator 5 depending on the output of the focus controller 8. A tracking error signal detector 10 detects a relative displacement between the focus of the light beam and a track on the data plane of the optical disk 1 depending on the output of the optical pickup 3, and issues a tracking error signal. A tracking controller 11 processes the tracking error signal with a filtering, such as phase compensation or low frequency compensation, thereby making the focus of the light beam to follow the track of the optical disk 1. A driver 12 drives the tracking actuator 6 depending on the output of the tracking controller. A layer move controller 13 receives the focus error signal, and moves the focus of the light beam from the data plane of the layer presently followed to the data plane of other layer. A selector 14 selects and issues either the output of the focus controller 8 or the output of the layer move controller 13. A tracking monitor 15 monitors the tracking error signal, and issues a light intensity reducing command signal to the light intensity controller 4.

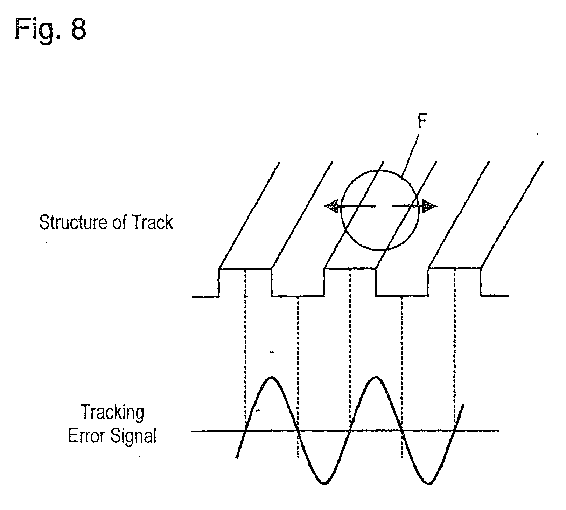

An operation in the conventional optical disk device having such configuration will be explained by referring to Figs. 8, 9, 10, and 11.

Fig. 8 is a schematic diagram showing the relation between the track structure and tracking error signal on the data plane of the optical disk 1, in which a focus F of the light beam illuminated on the data plane is shown.

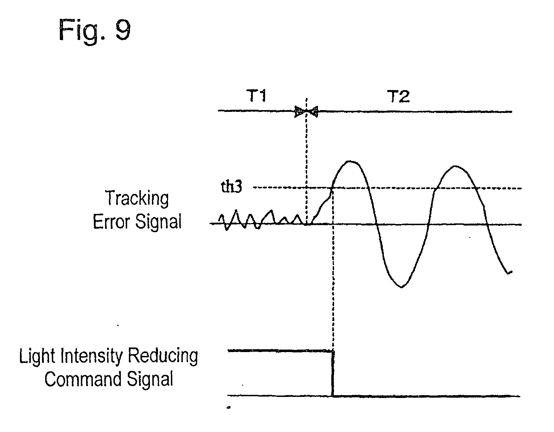

Fig. 9 shows a tracking error signal and a light intensity reducing command signal at the moment of out of a tracking control due to an external disturbance or vibration. The tracking control is performed normally in a period T1, and tracking control fails in a period T2. The tracking error signal is compared with a specified reference th3. The light intensity reducing command signal lowers the light intensity when it is at low level.

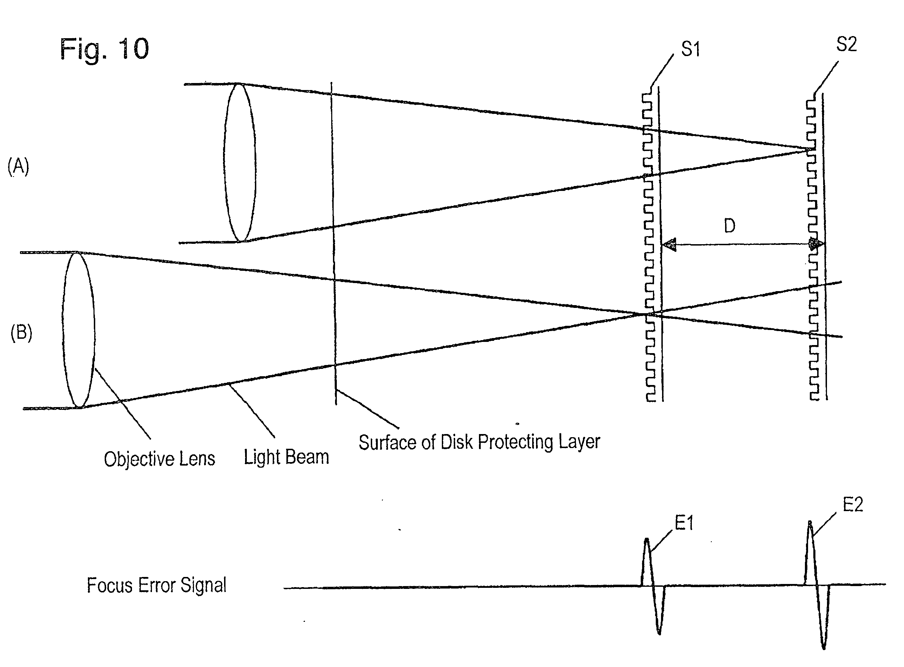

Fig. 10 shows the relation of a cross section of an optical disk having two layers of data planes, focal position of the corresponding light beam, and the focus error signal. A first data plane S1 and a second data plane S2 are located apart by a distance D. Fig. 10 shows an objective lens condensing the light beam of which focus following to the first data plane S1 and second data plane S2. The waveform of the focus error signal is an S-shaped waveform E1 when the beam passes through the first data plane S1, and is an S-shaped waveform E2 when the beam passes through the second data plane S2. The reflectivity of the second data plane S2 is usually set lower than that of the first data plane S1 because the light beam has to pass through the first data plane when recording or reproducing. Therefore, when passing through the second data plane S2, the light beam has an amplitude of the S-shaped waveform E2 slightly smaller than that of the S-shaped waveform E1.

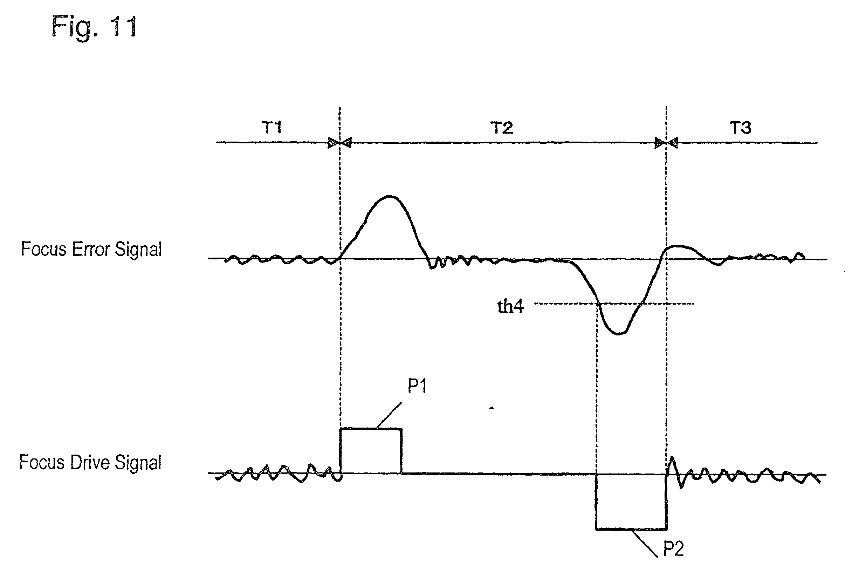

Fig. 11 shows the waveforms of the focus error signal and focus drive signal when the focus of the light beam is moved from the first data plane S1 presently followed to the second data plane S2. The focus error signal is compared with a specified reference th4. The focus drive signal includes an acceleration pulse P1 and a deceleration pulse P2. The light beam follows the first data plane in a period T1, and the beam follows the second data plane in a period T3. In the period T2, the beam moves from the first data plane to the second data plane.

When recording data on the data plane of the disk 1, the focus control system has the focus of the light beam follow the data plane of the optical disk 1. For this purpose, the focus error signal detector 7 detects the relative displacement between the focus of the light beam and data plane of the optical disk 1, and the focus controller 8 processes the displacement with a filtering, such as phase compensation or low frequency compensation. The selector 14 selects the output of the controller 8, and the driver 9 drives the focus actuator 5.

Then, the tracking control system has the focus of the light beam follow the track on the first data plane of the optical disk 1. For this purpose, the tracking error signal detector 10 detects the relative displacement between the focus of the light beam and track on the data plane of the optical disk 1, and the tracking controller 11 processes the displacement with a filtering, such as phase compensation or low frequency compensation. The driver 12 drives the tracking actuator 6.

The light intensity controller 4 receives a light intensity monitor signal from the optical pickup 3, and compares the monitor signal with and a predetermined signal, and drives the semiconductor laser of the pickup 3, thereby controlling the light beam intensity to a necessary level for recording.

In recording and reproducing of data in an optical disk, generally, the data is reproduced with a weak light intensity, and the data is recorded at a sufficiently stronger light intensity. The data is recorded in an optical disk by various techniques such as a phase change (PC) recording, magneto-optical (MO) recording, and pigment recording. In any technique, the light intensity is raised in a recording than in a reproducing, and a temperature of the recording film in the recording region must be raised. Actually, when recording a signal, in PC recording, the light intensity must be modulated depending on the signal, and in MO recording, the light intensity is required to modulate (light modulation method), or an applied magnetic field is required to modulate (magnetic field modulation method) depending on the signal. Such modulation process depending on the signal is not directly related with the purpose of the invention, and is not explained in detail.

During a recording operation, the tracking control may fail due to disturbance or vibration, defects on data plane or protective layer surface, flaw, dust deposits, or influences of other physical defects of disk, and thereby the focus of the light beam may be dislocated from the recording track to be focused. As a result, the temperature of the recording film in a recorded region may climb up, and data may be recorded or erased incorrectly. In the conventional optical disk device, therefore, the follow-up error of tracking control is always monitored during the recording operation. When the follow-up error exceeds a predetermined level, the light intensity is lowered to that not for recording in the optical disk, usually to a light intensity for reproducing.

This will be explained with referring to Fig. 8 and Fig. 9.

As shown in Fig. 8, based on a relative position of the focus F of light beam and track, an S-shaped tracking error signal is obtained. As shown in the period T1 in Fig. 9, when the focus F correctly follows the track, the tracking error signal becomes nearly zero. When going out of tracking control due to an influence of disturbance or vibration, as shown in the period T2 in Fig. 9, the tracking error signal increases, and a S-shaped signal is generated repeatedly whenever the focus crosses the track. The tracking monitor 15 compares the tracking error signal and a predetermined level th3 in Fig. 9. When the error signal exceeds the level th3, the monitor 15 judges that the tracking control fails or is about to fail, and sets the light intensity reducing command signal to a low level. As a result, the light intensity controller 4 lowers the intensity of the light beam to the reproducing level. In Fig. 9, even after the light intensity reducing command signal is at the low level, and after the intensity of the light beam is lowered, the tracking error signal is not lowered. This is because when the device lowers the light intensity to the reproducing intensity, simultaneously, a gain corresponding to the signal detected from the optical pickup is raised corresponding to the drop of the light intensity. This is an ordinary process, and is not particularly shown in the diagram.

By this operation, before the focus of the light beam goes out of the target track, the intensity of the light beam is lowered to the reproducing intensity. Therefore if failing tracking control due to disturbance, vibration or physical defect on the disk, the device prevents data from recording and erasing incorrectly in adjacent tracks.

In the case that the conventional optical disk device records data in an optical disk having plural layers of data planes, if failing a focus control due to disturbance, vibration or physical defect on the disk, the device may record and erase data incorrectly in the data plane on other layer. For recording data in plural layers, if the light beam following a layer moves to other layer during recording the data, the device may records or erases data incorrectly in a region where the data is not intended to be recorded. The problem will be more specifically explained with referring to Fig. 10 and Fig. 11.

For recording signals on the first data plane S1, as shown in Fig. 10(A), the focus of the light beam follows the first data plane S1. At this moment, the light beam is also emitted to the second data plane S2, but since the first data plane S1 and second data plane S2 are located apart from each other by a distance D, the light beam does not focus sufficiently on the second data plane S2. Therefore, the quantity of light per unit area is small, and the temperature of the second data plane S2 does not rise to the recording temperature, and therefore wrong recording or wrong erasing of signals does not occur. Similarly, as shown in Fig. 10(B), when the focus of the light beam follows the second data plane S2, the light beam does not focus sufficiently on the first data plane S12, and therefore wrong recording or wrong erasing of signal does not occur on the first data plane S1. In the case that signals are recorded on the first data plane S1 as shown in Fig. 10(A), if the focus control is disturbed by disturbance, vibration or physical defect on the disk, as shown in Fig. 10(B), the light beam may focus nearly on the second data plane S2. In this case, signal may be recorded or erased incorrectly in the second data plane S2 where the signal is not intended to record. Even if not reaching a state in Fig. 10(B), if slightly approaching from a state in Fig. 10(A) to that in Fig. 10(B), the light beam has a small spot diameter on the second data plane S2. Accordingly, the light beam has the quantity per unit area increase, the temperature of the plate rises, and thus, recorded data in the second data plane S2 may be damaged by incorrect recording or erasing. The similar operation may be performed when data is recorded in the second data plane S2. In this case, a disturbed focus control has the signal in the first data plane S1 recorded or erased incorrectly.

When recording signals in two layers during the recording operation, the light beam has the focus need to move from the data plane of the layer being followed to the data plane on other layer. Fig. 11 shows an example of a layer moving method. In a period T1, the focus of the light beam follows the first data plane S1. At this moment, the focus error signal is nearly zero. For moving the focus of the light beam to the second data plane S2, the device makes the selector 14 select an output of the layer move controller 13. The selector opens a focus control loop, applies an acceleration pulse P1 as the focus drive signal, and makes the driver 12 drive the focus actuator 5. As a result, the focus of the light beam moves in a vertical direction against the data plane of the disk 1 nearly to the second data plane S2. When the light beam focuses nearly to the second data plane S2, an S-shaped focus error signal is generated. The focus error signal is compared with a predetermined reference level th4, and then, a deceleration pulse P2 is applied as the focus drive signal. The focus of the light beam accordingly moves slowly. Then, the selector 14 selects the output of the focus controller 8, thereby closing the focus control loop. With this operation, the focus of the light beam moves from from the first data plane S1 presently followed to the second data plane S2.

In this operation, the focus control loop is once opened, and therefore the tracking control loop is opened at least once in this period. That is, after moving to the second data plane, the focus of the light beam follows a target track by the tracking control. In other words, soon after moving to the second data plane S2, the light beam does not follow the target track. In this period, therefore, the light beam may record or erase signal incorrectly in a track in a region where the signal is not intended to record.

### SUMMARY OF THE INVENTION

An optical disk device is capable of avoiding wrong recording or wrong erasing of signal in a region of the disk where the signal is not intended to record in the case that a focus control is disturbed during the recording operation due to disturbance, vibration or physical defect of the disk, or in the case of recording over plural layers.

The device, when recording signals in an optical disk having plural layers of data planes, reduces an intensity of the light beam to a level unable to record data in the optical disk with one of the following operations: (i) monitoring a focus error signal; (ii) monitoring an intensity of a reflected light; or (iii) detecting that an data plane on which the light beam focuses moves to another layer.

Further, when moving the data plane followed by the light beam during recording operation to a data plane of another layer, the device once reduces the intensity of the light beam. After moving the light beam to another layer, the device raises the intensity of the light beam again.

### BRIEF DESCRIPTION OF THE DRAWINGS

Fig. 1 is a block diagram showing principal components of an optical disk device according to exemplary embodiment 1 of the invention.
Fig. 2 is a block diagram showing principal components of an optical disk device according to exemplary embodiment 2 of the invention.
Fig. 3 is a block diagram showing principal components of an optical disk device according to exemplary embodiment 3 of the invention.
Fig. 4 is a block diagram showing principal components of an optical disk device according to exemplary embodiment 4 of the invention.
Fig. 5 is a waveform diagram showing an operation of the optical disk device according to embodiment 1 of the invention.
Fig. 6 is a waveform diagram showing an operation of the optical disk device according to embodiment 2 of the invention.
Fig. 7 is a block diagram showing principal components of a conventional optical disk device.
Fig. 8 is a schematic diagram showing the relation between a track and a signal of the conventional optical disk device.
Fig. 9 is a waveform diagram showing an operation of the conventional optical disk device.
Fig. 10 illustrates an operation of the conventional optical disk device.
Fig. 11 is a waveform diagram showing an operation of the conventional optical disk device.

### DESCRIPTION OF THE PREFERRED EMBODIMENT

### (Embodiment 1)

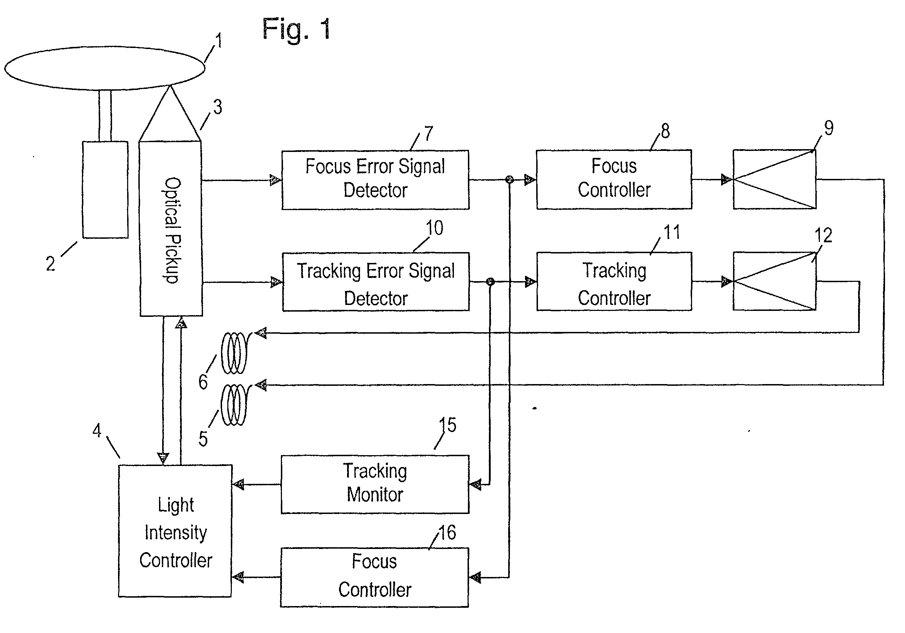

Fig. 1 is a block diagram showing a schematic configuration of an optical disk device according to exemplary embodiment 1 of the present invention. In Fig. 1, elements 1 to 12 and 15 are the same as in the conventional optical disk device shown in Fig. 7, and the explanation will be omitted. A focus monitor 16 monitors an increase of an amplitude of a focus error signal issued by a focus error detector 7 and issues a light intensity reducing command signal to a light intensity controller 4 when the amplitude exceeds a specified reference.

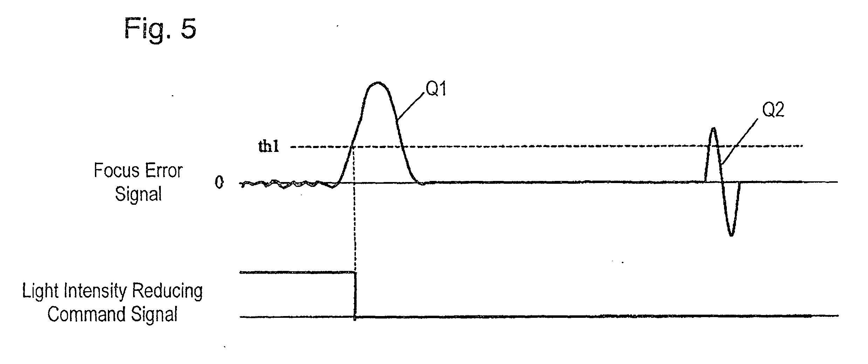

An operation of the device of embodiment 1 will be explained in Fig. 5.

Fig. 5 shows a focus error signal and light intensity reducing command signal under the condition that the focus control during recording is out of order due to disturbance, vibration or physical defect of the disk. A low level of the light intensity reducing command signal reduces the light intensity. The focus monitor 16 compares a specified reference th1 and the focus error signal. A pulse Q1 is a focus error signal representing that the focus control goes out of the first data plane S1. A pulse Q2 is a focus error signal representing that the focus of the light beam passes through the second data plane S2.

A signal is recorded as the focus of the light beam follows the first data plane S1 by a focus control. In this case, the of focus control, tracking control, and light beam intensity control are the same as in the conventional device, and the detailed description is omitted. The intensity of the light beam is controlled so that the signal can be recorded in the data plane of the optical disk 1.

If the focus control is disturbed due to disturbance, vibration or physical defect of the disk, and if the focus of the light beam goes out of the first data plane S1, the focus error signal has the amplitude gradually increase as indicated by the pulse Q1, exceed the peak of the S-shaped signal, and gradually decline. When the focus of the light beam passes through the second data plane S2, the S-shaped signal as like the pulse Q2. At this moment, if the intensity of the light beam illuminating the optical disk remains at the recording level, the light beam has the focus approach the second data plane S2, and then records or erases the signal is recorded incorrectly in the data plane S2.

The focus monitor 16 detects an increase of the focus error signal. Specifically, the focus monitor 16 compares the focus error signal and the reference th1, and detects that the amplitude of the focus error signal exceeds the reference th1. The focus monitor 16 may compare the focus error signal directly with the reference th1 although, in this case the focus error signal has to be processed averaging or smoothing. Plural specified references may be set, and the increase of the error signal may be judged by a history of comparison results between the references and the focus error signal.

The focus monitor 16, upon judging the increase of the focus error signal, sends the light intensity reducing command signal at a low level to the light intensity controller 4. Then, the light intensity controller 4 immediately reduces the intensity of the light beam to the reproducing level. Thereby, whenever a normal recording condition in the first data plane changes very slightly, the recording operation is immediately interrupted, and the data plane of other layer can be prevented from wrong recording or wrong erasing of signal. This is also performed when signals are recorded in the second data plane S2.

### (Embodiment 2)

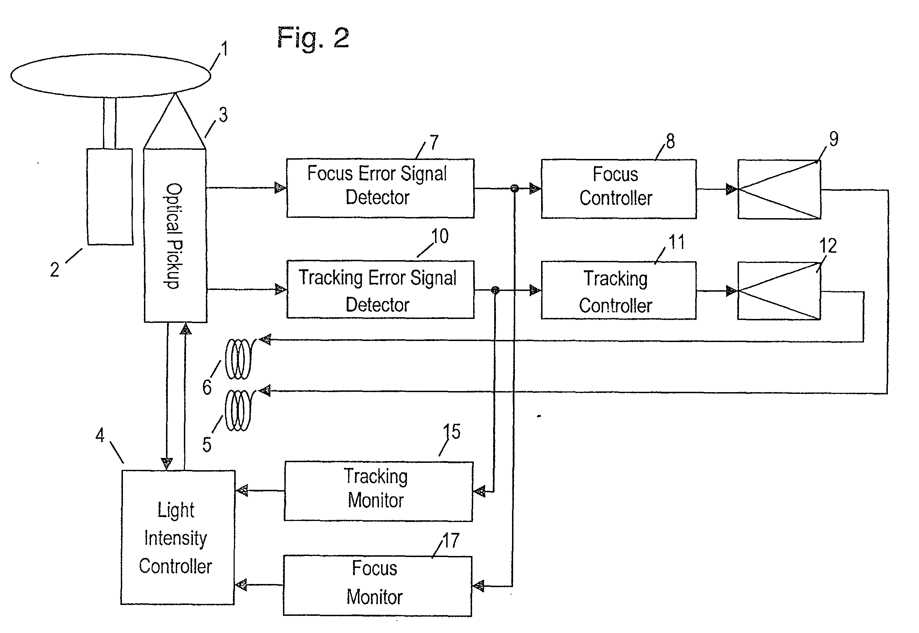

Fig. 2 is a block diagram showing a schematic configuration of an optical disk device according to exemplary embodiment 2 of the present invention.

In Fig. 2, elements 1 to 12 and 15 are the same as in the conventional optical disk device shown in Fig. 7, and the explanation is omitted. A reflected light quantity monitor 17 detects the quantity of a light reflected from the optical disk 1 and monitors a drop of the amplitude of the light. When the amplitude becomes smaller than a specified reference, the monitor 17 issues a light intensity reducing command signal to a light intensity controller 4.

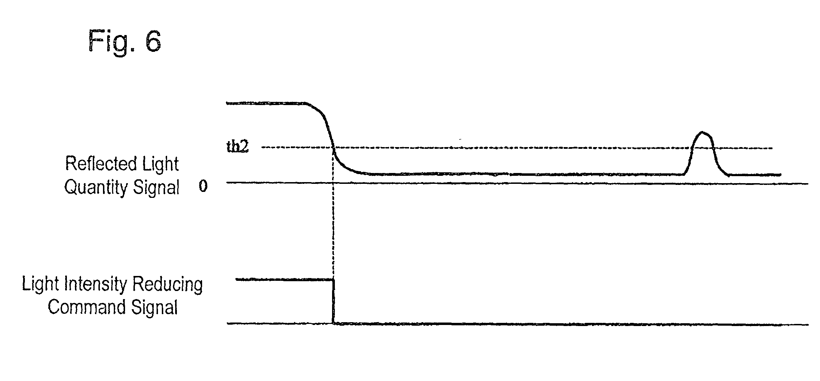

An operation of the device of embodiment 2 is explained in Fig. 6.

Fig. 6 shows waveforms of a reflected light quantity signal and a light intensity reducing command signal at the moment when the focus control is out of order due to disturbance, vibration or physical defect of the disk while the focus of the light beam follows the first data plane S1 and recording signals on the plane. A low level of the light intensity reducing command signal reduces the light intensity. The reflected light quantity monitor 17 compares a reference th2 and the reflected light quantity signal.

The signal is recorded with the focus of the light beam following the first data plane S1 by focus control. In this case, the focus control, tracking control, and light beam intensity control are performed in the same as in the conventional device, and the detailed explanation is omitted. The intensity of the light beam is controlled so that the signal can be recorded in the data plane of the optical disk 1.

When the focus control disturbed due to disturbance, vibration or physical defect of the disk makes the focus of the light beam go out of the first data plane S1, the focus error signal usually has the amplitude increase gradually as explained in embodiment 1, and the out-of-focus is detected. However, the focus error signal is obtained only when the light beam focuses nearly on the data plane, for example, about 10µm apart as indicated by pulses E1, E2 in Fig. 10. Therefore, if the S-shaped waveform Q1 is missed, an error is no longer detected. In the device of embodiment 2, the reflected light quantity monitor 17 detects the quantity of the light reflected from the optical disk 1. The monitor 17, upon judging that the quantity of light is lower than a specified reference th2, send the light intensity reducing command signal at a low level to the light intensity controller 4. Then, the light intensity controller 4 immediately lowers the light intensity to the reproducing level. The quantity of the reflected light is always low except when the light beam focuses nearly on the first or second data plane as shown in Fig. 6. Therefore, unlike the focus error signal, there is no problem of missing the momentary signal, and a focus servo failure is detected more securely. However, a sensitivity of detecting the out-of-focus of the light beam with a change of the quantity of the reflected light is lower than that with the focus error signal. Therefore, if a quick response is required, the servo failure had better be detected with focus error signal. Thus, the failure may be detected preferably with the focus error signal and the quantity of the reflected light.

### (Embodiment 3)

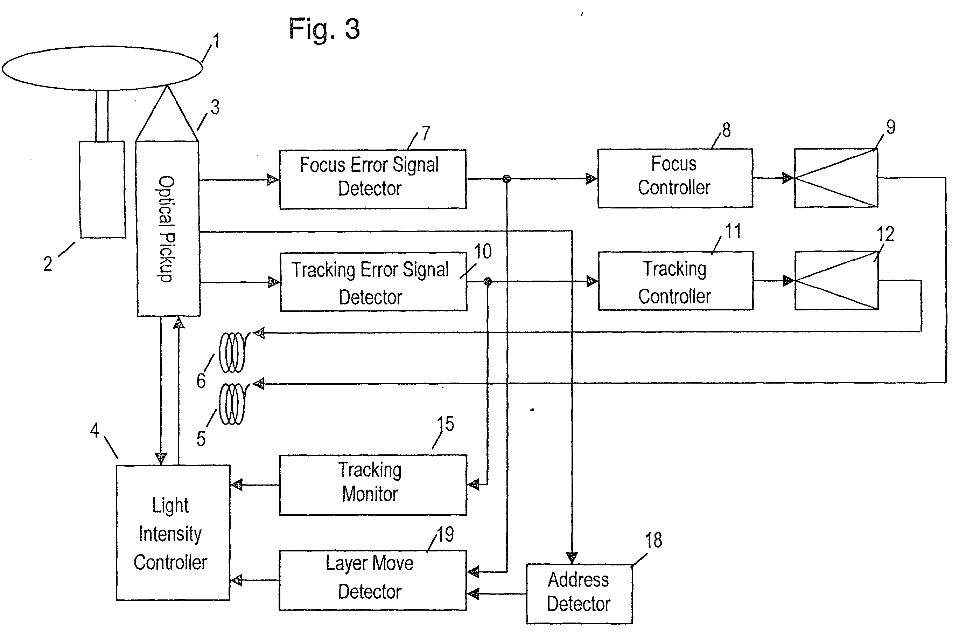

Fig. 3 is a block diagram showing a schematic configuration of an optical disk device according to exemplary embodiment 3 of the present invention.

In Fig. 3, elements 1 to 12 and 15 are the same as in the conventional optical disk device shown in Fig. 7, and the explanation is omitted. An address detector 18 detects address data on which a signal is recorded on the disk on the basis of the quantity of a light reflected from the optical disk 1. A layer move detector 19 detects, on the basis of the address data, that the data plane followed by the light beam moves to other layer and issues a light intensity reducing command signal to a light intensity controller 4.

An operation of the device of embodiment 3 having such configuration will be explained.

While a signal is recorded as the focus of the light beam follows the first data plane S1 by focus control, if the focus control is disturbed due to disturbance, vibration or physical defect of the disk, the disturbance of focus control is detected with the focus error signal in embodiment 1 or with the quantity of reflected light in embodiment 2. This is usually enough, but after the focus of the light beam goes out of the first data plane due to disturbance of focus control, the second data plane may be focused in a relatively short time. In this case, the focus control is disturbed temporarily, but the focus control soon returns to be normal. Therefore, if missing the temporary disturbance of the focus control with monitoring the focus error signal or the quantity of the reflected light, the device may record signals continuously in the data plane of a wrong layer, which may cause a serious problem for the system. To prevent this, it is detected that the focus of the light beam is moved from the data plane of the layer to be recorded, and the light intensity is reduced to the reproducing level.

As an easy, secure method of detecting the layer move, the address detector 18 detects the address data on which a signal is recorded on the disk, and the layer move detector 19 distinguishes the present layer on the basis of the address data. As explained in Fig. 10, since the reflectivity differs in each layer, the amplitude of the quantity of the reflected light varies depending on the layer. The optical disk device learns it when starting to reproduce signals and identifies the layer with the amplitude of the quantity of the reflected light. Besides, like the reference th1 in Fig. 5 in embodiment 1, the device may has the focus error signal compared with a specified reference, may count the number of times of the focus error signal exceeding the reference or a history, and thereby, may detect the number of layers where the light beam moves on. Thus, various methods are considered for detecting the layer move. If the layer move cannot be detected with the focus error signal or the quantity of the reflected light, the light intensity is reduced promptly, and wrong recording or wrong erasing may be prevented.

### (Embodiment 4)

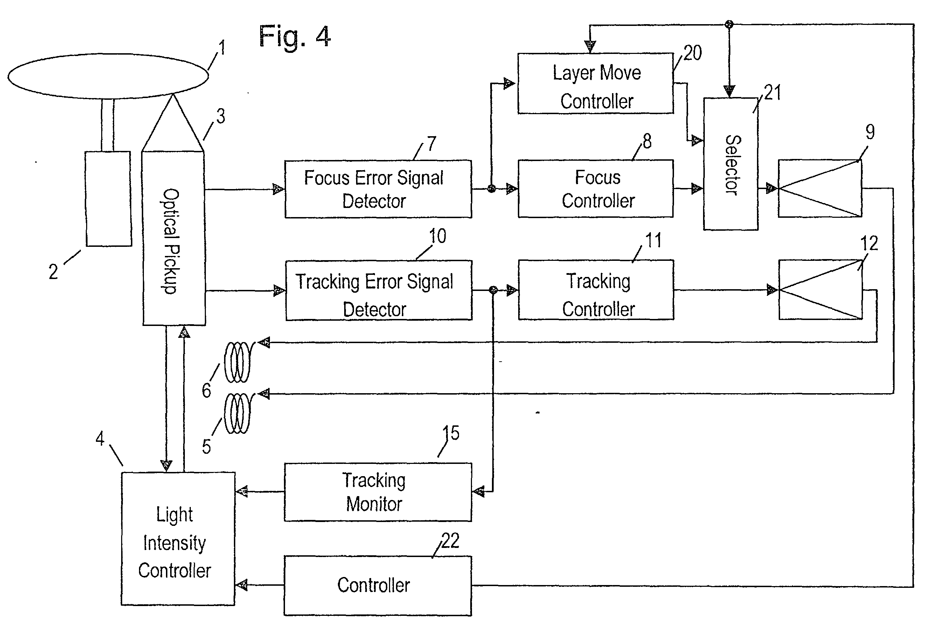

Fig. 4 is a block diagram showing a schematic configuration of an optical disk device according to exemplary embodiment 4 of the present invention.

In Fig. 4, elements 1 to 12 and 15 are the same as in the conventional optical disk device shown in Fig. 7, and the explanation is omitted. A layer move controller 20 moves the focus of the light beam to other layer. A selector 21 selects one of the focus controller 8 and the layer move controller 20. A controller 22 controls the selector 21, layer move controller 20, and light intensity controller 4.

An operation of the optical disk device of embodiment 4 having such configuration will be explained.

When recording signals in two layers, the focus of the light beam needs to move over the layers of the data plane during a recording operation. However, if the beam moves over the layers during the recording operation, as explained in the conventional device, the signal may be recorded or erased incorrectly in the track in the region not intended to be recorded by the time when the light beam follows a target track of the light beam,.

The controller 22 sends a light intensity reducing command signal to the light intensity controller 4 to reduce the intensity of the light beam to the reproducing level. At this moment, the quantity of a light reflected from the disk 1 is also reduced, and thus, a gain of the focus control system and tracking control system decreases, and hence, the gain of the control system needs to be raised if necessary. Then, the controller 22 makes the selector 21 select the output of the layer move controller 20, and the layer moves to the focus of the beam as explained in Fig. 11. When the move of the layer is complete, the controller 22 makes the selector 21 select the output of the focus controller 8 and close the focus control loop. Further, the controller 22, after the focus of the light beam is pulled into the track of the target address, controls the light intensity controller 4 to raise the intensity of the light beam again to the recording level. By these operations, the light intensity remains at the reproducing level until the focus of the light beam follows the target track of the layer at the destination. Therefore, regardless of stability of pull-in of focus control or tracking control, a signal is not recorded or erased incorrectly in the region in which the signal is not intended to recorded.

In the foregoing embodiments 1 to 4 of the invention, the light intensity is reduced to the reproducing level in order to prevent wrong reading or wrong erasing. The level is not specified as far as wrong recording or wrong erasing can be prevented. The light beam may be substantially turned off.

In the devices explained in embodiments 1 to 4, when recording signals in the first data plane S1, the further plane from a light beam source, a signal is prevented from being incorrectly recorded and erased in the second data plane S2, the closer plane from the light beam source. This technology is similarly applied to the case of preventing a signal from being incorrectly recorded and erased in the first data plane while recording signals in the second data plane.

According to embodiments 1 to 4, the two-layer disk is described for the ease of the explanation. The invention is similarly applied to the disks having three or four layers, or any plural layers.

The control method of the light beam explained in embodiments 1 to 4 is executed by the software on the microcomputer incorporated in the optical disk. The method may be executed by external devices connected to the optical disk device.

### INDUSTRIAL APPLICABILITY

The invention relates to an optical disk device for recording data in the optical disk having plural layers of data planes.

The optical disk device of the invention includes a focus monitor. When signals are recorded in the optical disk having plural layers of data planes, if the focus control is disturbed during recording operation due to disturbance, vibration or physical defect of disk, the signals are prevented from being incorrectly recorded or erased in the data plane of other layer different from the data plane on which the signals are recorded.

The optical disk device of the invention may include a reflected light quantity monitor. Even if the disturbance of focus control cannot be detected by focus error signal, a signal is prevented from being incorrectly recorded or erased in the data plane of other layer different from the data plane on which the signal is recorded.

The optical disk device of the invention may include a layer move detector. In the case that the focus control is disturbed, even if the device does not detect that the focus of the light beam moves to other layer in a relatively short time with a focus error signal or a reflected light quantity, the device prevents a signal from being incorrectly recorded or erased.

The optical disk device of the invention may include a layer move controller. When signals are recorded signals in plural layers, the signals are prevented from being incorrectly recorded or erased in a region of the disk where the signals are not intended to record.

## Claims

1. An optical disk device comprising:
an optical system for condensing and emitting a light beam to an optical disk having plural data planes at a data-recordable intensity;
a focus error signal detector for detecting a focus error signal corresponding to a relative displacement between a focus of the light beam and the data planes based on a reflected light from the data planes;
a focus controller for matching the focus of the light beam with the data planes depending on the focus error signal;
a light intensity controller for controlling an intensity of the light beam; and
a focus monitor for monitoring the focus error signal,
wherein the light intensity controller controls the intensity of the light beam depending on an output of the focus monitor.

2. The optical disk device of claim 1,
wherein the focus monitor monitors an increase of an amplitude of the focus error signal, and
wherein the light intensity controller reduces, depending on the output of the focus monitor, the intensity of the light beam to a level at which data can not be recorded in the optical disk.

3. An optical disk device comprising:
an optical system for condensing and emitting a light beam to an optical disk having plural data planes at a data-recordable intensity;
a focus error signal detector for detecting a focus error signal corresponding to a relative displacement between a focus of the light beam and the data planes based on a reflected light from the data planes;
a focus controller for matching a focus of the light beam with the data planes depending on the focus error signal;
a light intensity controller for controlling an intensity of the light beam; and
a reflected light quantity monitor for monitoring a quantity of the reflected light from the data planes,
wherein the light intensity controller controls the intensity of the light beam depending on an output of the reflected light quantity monitor.

4. The optical disk device of claim 3,
wherein the reflected light quantity monitor monitors a drop of the quantity of the reflected light, and
wherein the light intensity controller reduces, depending on the output of the reflected light quantity monitor, the intensity of the light beam to a level at which data can not be recorded in the optical disk.

5. An optical disk device comprising:
an optical system for condensing and emitting a light beam to an optical disk having plural data planes at a data-recordable intensity;
a focus error signal detector for detecting a focus error signal corresponding to a relative displacement between a focus of the light beam and the data planes based on a reflected light from the data planes;
a focus controller for matching the focus of the light beam with the data planes depending on the focus error signal;
a light intensity controller for controlling an intensity of the light beam; and
a layer move detector for detecting that the focus of the light beam moves from one of the data planes to other of the data planes,
wherein the light intensity controller reduces, depending on an output of the layer move detector, the intensity of the light beam to a level at which data can not be recorded in the optical disk.

6. An optical disk device comprising:
an optical system for condensing and emitting a light beam to an optical disk having plural data planes at a data-recordable intensity;
a focus error signal detector for detecting a focus error signal corresponding to a relative displacement between a focus of the light beam and the data planes based on a reflected light from the data planes;
a focus controller for matching the focus of the light beam with the data planes depending on the focus error signal;
a light intensity controller for controlling an intensity of the light beam; and
a layer move controller for moving the focus of the light beam from one of the data planes to other of the data planes;
wherein the light intensity controller reduces the intensity of the light beam to a level at which data can not be recorded in the optical disk, and then, the layer move controller moves the focus of the light beam.

7. A method for controlling an optical disk which includes:
an optical system for condensing and emitting a light beam to an optical disk having plural data planes at a data-recordable intensity;
a focus error signal detector for detecting a focus error signal corresponding to a relative displacement between a focus of the light beam and the data planes;
a focus controller for matching the focus of the light beam with the data planes; and
a light intensity controller for controlling an intensity of the light beam,
said method comprising the steps of:
detecting the focus error signal based on a reflected light from the data planes; and
controlling the intensity of the light beam depending on the focus error signal.

8. The method of claim 7, wherein said step of controlling the intensity of the light beam comprises the sub step of reducing the intensity of the light beam to a level at which data can not be recorded in the optical disk when an amplitude of the focus error signal increases.

9. A method for controlling an optical disk which includes:
an optical system for condensing and emitting a light beam to an optical disk having plural data planes at a data-recordable intensity;
a reflected light quantity monitor for monitoring a quantity of a reflected light of the light beam from the data planes;
a focus controller for matching the focus of the light beam with the data planes; and
a light intensity controller for controlling an intensity of the light beam,
said method comprising the steps of:
monitoring the quantity of the reflected light; and
controlling the intensity of the light beam depending on the quantity of the reflected light.

10. The method of claim 9,
wherein said step of monitoring the quantity of the reflected light comprises the sub step of monitoring a drop of the quantity of the reflected light, and
wherein said step of controlling the intensity of the light beam comprises the sub step of reducing the intensity of the light beam to a level at which data can not be recorded in the optical disk when the quantity of the reflected light decreases.

11. A method for controlling an optical disk which includes:
an optical system for condensing and emitting a light beam to an optical disk having plural data planes at a data-recordable intensity;
a layer move detector for detecting that a focus of the light beam moves from one of the data planes to other of the data planes;
a focus controller for matching the focus of the light beam with the data planes; and
a light intensity controller for controlling an intensity of the light beam,
said method comprising the steps of:
detecting that the focus of the light beam moves from one of the data planes to other of the data planes; and
reducing an intensity of the light beam to a level at which data can not be recorded in the optical disk when it is detected that the focus of the light beam moves at said step of detecting that the focus of the light beam moves.

12. A method for controlling an optical disk which includes:
an optical system for condensing and emitting a light beam to an optical disk having plural data planes at a data-recordable intensity;
a focus controller for matching a focus of the light beam with the data planes;
a layer move controller for moving the focus of the light beam from one of the data planes to other of the data planes; and
a light intensity controller for controlling an intensity of the light beam,
said method comprising the steps of:
reducing the intensity of the light beam to a level at which data can not be recorded in the optical disk; and
then, moving the focus of the light beam from one of the data planes to other of the data planes.
